# EUROPÄISCHE PATENTANMELDUNG

(11) **EP 1 158 018 A1**
(43) Veröffentlichungstag der Anmeldung: **28.11.2001**
(21) Anmeldenummer: 01111591.2
(22) Anmeldetag: 12.05.2001
(51) Int. Cl.: C08K 3/00

(54) **Verwendung eines modifizierten Polypropylencompounds für die Herstellung von Anbauteilen in der Automobilindustrie**

(30) Priorität: 24.05.2000 DE 10025427
(71) Anmelder: Sachtleben Chemie GmbH, 47198 Duisburg (DE)
(72) Erfinder: Uhlenbroich, Theodor, Dr., 47269 Duisburg (DE); Borg, Dietmar, 40789 Monheim (DE)
(74) Vertreter: Uppena, Franz, Dr.

(57) **Zusammenfassung**

Beschrieben wird die Verwendung von Polypropylen oder eines Polypropylencompounds, welches 5 bis 30 Gew.-% (bezogen auf das fertige Compound) Bariumsulfat mit einer mittleren Teilchengrösse von 0,5 bis 5 µm und 0,5 bis 3 Gew.-% (bezogen auf das fertige Compound) Talkum mit einer mittleren Teilchengrösse von 0,5 bis 5 µm enthält, zur Herstellung von Automobilanbauteilen, wie z.B. Stossfänger.

## Beschreibung

Die Erfindung betrifft die Verwendung eines modifizierten Polypropylencompounds für die Herstellung von Anbauteilen in der Automobilindustrie.

Polypropylencompounds (PP-Compounds), die mit einem oder mehreren Elastomeren, wie Ethylen-Propylen-Dien und Polymethylen (EPDM) oder Styrol-Acrylnitril-Copolymeren (SAN), modifiziert sind, finden Verwendung bei der Herstellung von Anbauteilen (z.B. Stossfänger oder Kotflügel) in der Automobilindustrie. Die eingesetzten Elastomeren bewirken eine im Vergleich zu nicht elastomermodifizierten PP-Compounds höhere Schlagzähigkeit und Tieftemperaturschlagzähigkeit. Von Nachteil sind u.a. negative Auswirkungen auf die Wärmeformbeständigkeit (Vicat-Temperatur) und die Oberflächenhärte der elastomermodifizierten PP-Compounds und der relativ hohe Preis der genannten Elastomere.

Aufgabe der Erfindung ist es, einen Weg aufzuzeigen, aus PP-Compounds Anbauteile mit einer erhöhten Wärmeformbeständigkeit (Vicat-Temperatur) und einer erhöhten Oberflächenhärte für die Automobilindustrie herzustellen, ohne dass relativ teure Elastomere, wie EPDM oder SAN, eingesetzt werden, wobei die Eigenschaften des erfindungsgemäss verwendeten PP-Compounds, wie z.B. Schlagzähigkeit, Tieftemperaturschlagzähigkeit, Elastizitätsmodul (E-Modul) und Lackhaftung, denen der derzeit eingesetzten, elastomermodifizierten PP-Compounds entsprechen sollen oder günstigenfalls noch verbessert werden sollen.

Gelöst wird die Aufgabe durch die Verwendung von Polypropylen oder eines Polypropylencompounds, welches durch Zugabe von 5 bis 30 Gew.-% (bezogen auf das fertige Compound) Bariumsulfat mit einer mittleren Teilchengrösse von 0,5 bis 5 µm und durch Zugabe von 0,5 bis 3 Gew.-% (bezogen auf das fertige Compound) Talkum mit einer mittleren Teilchengrösse von 0,5 bis 5 µm modifiziert wurde, zur Herstellung von Automobilanbauteilen.

Es wurde gefunden, daß das erfindungsgemäß verwendete und modifizierte PP-Compound eine höhere Wärmeformbeständigkeit und eine höhere Oberflächenhärte und damit eine verbesserte Lackhaftung bei ansonsten mit herkömmlich verwendeten PP-Compounds vergleichbaren Eigenschaften aufweist. Von weiterem Vorteil des erfindungsgemäss verwendeten PP-Compounds ist, dass es kein teures Elastomer enthält.

Als Polypropylen werden die bei der Herstellung von Anbauteilen üblicherweise eingesetzten Polypropylene verwendet. Es kann z.B. ein handelsübliches, leichtfließendes Polypropylen-Homopolymer oder Polypropylen-Copolymer mit einem Schmelzindex MFR nach DIN ISO 1133 von mindestens 10 g / 10 min eingesetzt werden.

Ist eine durch die Zugabe von BaSO₄ bedingte Erhöhung der Dichte des PP-Compounds weniger gewünscht, beträgt die Zugabemenge an Bariumsulfat bevorzugt 5 bis 20 Gew.-%.

Die mittlere Teilchengrösse des Bariumsulfates beträgt bevorzugt 2 bis 4 µm.

Die mittlere Teilchengrösse des Talkums beträgt bevorzugt 1 bis 3 µm.

Das erfindungsgemäss verwendete PP-Compound kann auch noch weitere gebräuchliche Hilfs- und Zusatzstoffe, wie z.B. Polyethylen, Pigmente (Ruß) oder Stabilisatoren, enthalten. Als Stabilisatoren können übliche Antioxidantien, z.B. sterisch gehinderte Phenole oder sterisch gehinderte Triarylphosphite, verwendet werden.

Aus dem erfindungsgemäss verwendeten PP-Compound werden in bekannter Weise Anbauteile für die Automobilindustrie hergestellt.

Der Gegenstand der Erfindung wird anhand der folgenden Beispiele näher erläutert.

### Erfindungsgemäße Beispiele 1 bis 3 und Vergleichsbeispiele A und B

Die in der Tabelle 1 angegebenen, modifizierten PP-Compounds wurden hergestellt durch Vormischen der Inhaltsstoffe und anschließendem 2-fachen Extrudieren in einem Doppelschneckenextruder (Leistritz). Die Drehzahl betrug ca. 30 Umdrehungen pro Minute und die Temperatur in allen Zonen betrug ca. 200 °C.

**Tabelle 1:**

| Rezepturen der erfindungsgemäss verwendeten PP-Compounds (Zahlenangaben in g): | | | | |
|---|---|---|---|---|
| **Beispiel** | PP-Compound ¹⁾ | Bariumsulfat ²⁾ | Talkum ³⁾ | Polyethylen LD 1922 ⁴⁾ |
| 1 | 1360 | 400 | 40 | 200 |
| 2 | 1760 | 220 | 20 | |
| 3 | 1760 | 210 | 30 | |

| | | | | |
|---|---|---|---|---|
| ¹⁾ = PP Block-Copolymer StamylanP PHC27 von DSM, MFR = 14 g /10 min | | | | |
| ²⁾ = Bariumsulfat Blanc Fixe N von Sachtleben Chemie, d 50 = ca. 3 µm | | | | |
| ³⁾ = gemahlenes Talkum Fintalk M 05 von Finminerals, d 50 = ca. 2,3 µm | | | | |
| ⁴⁾ = Low Density Polyethylene 1922 T von DSM, Dichte 919 kg/m3, MFI (190 °C und 5 kg) 75 dg/min, Shore D 45 | | | | |

Die Eigenschaften Schlagzähigkeit und Kälteschlagzähigkeit wurden nach DIN EN ISO 179, die maximale Biegespannung und der Biege-E-Modul nach EN ISO 178, die Vicat-Temperatur B/50 nach DIN EN ISO und der Schmelzindex (MFR) nach DIN ISO 1133 bestimmt.

Zur Bestimmung der Kälteschlagzähigkeit wurden aus einem Teil der extrudierten Mischung Probekörper ohne Kerbe (Normstab nach DIN 53453) hergestellt und vor der Bestimmung der Kälteschlagzähigkeit in flüssigen Stickstoff getaucht. Zur Bestimmung der Kälteschlagzähigkeit wurden die Probekörper dem Stickstoff entnommen, 1 Minute bei Raumtemperatur gehalten und anschießend zerschlagen, wobei die Probekörper eine Temperatur von ca. - 50 °C hatten.

Die Ergebnisse der Messungen sind in Tabelle 2 aufgeführt.

**Tabelle 2:**

| Eigenschaften der erfindungsgemäss verwendeten PP-Compounds (Beispiele 1 bis 3) und elastomermodifizierten Compounds (Vergleichsbeispiele A und B): | | | | | | | |
|---|---|---|---|---|---|---|---|
| **Bsp** | Schlagzähigkeit (mJ/mm²) | Kälteschlagzähigkeit (mJ/mm²) | max. Biegespannung (N/mm²) | Biege-E--Modul (N/mm²) | MFR (g/10 Min) | Vicat-Temp. B/50 (°C) | Shore D Härte (N/mm²) |
| 1 | ohne Bruch | 18,6 | 27,9 | 1219 | 13,2 | 58 | 63 |
| 2 | ohne Bruch | 19,3 | 28,8 | 1102 | 14,9 | 62 | 66 |
| 3 | ohne Bruch | 25,3 | 27,3 | 1125 | 16 | 62 | 64 |
| A ¹⁾ | ohne Bruch | 22,6 | 21,1 | 1136 | 13 | 38 | 55 |
| B ²⁾ | ohne Bruch | 25,4 | 27,0 | 1360 | 15,6 | 43 | 50 |

| | | | | | | | |
|---|---|---|---|---|---|---|---|
| ¹⁾ Keltan 2500/2 von DSM | | | | | | | |
| ²⁾ Keltan 2550/1 von DSM | | | | | | | |

Zu Vergleichszwecken sind in den Vergleichsbeispielen A und B die entsprechenden Messwerte von herkömmlichen, elastomermodifizierten PP-Compounds (Keltan 2500/2 und Keltan TP 2550/1 der Firma DSM) aufgeführt.

Aus den Messergebnissen ist ersichtlich, dass die erfindungsgemäss verwendeten PP-Compounds, welche vorteilhafterweise kein Elastomer enthalten, bzgl. der Eigenschaften Schlagzähigkeit, Kälteschlagzähigkeit, maximale Biegespannung, Biege-E-Modul und Schmelzindex in etwa den elastomermodifizierten PP-Compounds entsprechen. Deutlich erhöht ist die Wärmeformbeständigkeit, wofür die Vicat-Temperatur ein Maß ist. Auch die Shore-D-Härte ist bei erfindungsgemäßer Verwendung der mit Bariumsulfat und Talkum modifizierten PP-Compounds vorteilhafterweise erhöht.

### Beispiel 4

Entsprechend den Beispielen 1 bis 3 wurden größere Mengen PP-Compounds hergestellt, die anschießend granuliert wurden. Aus diesen Gratulaten wurden mit Hilfe des bekannten Spritzgießverfahrens Anbauteile, in diesem Fall Automobilstoßfänger, hergestellt. Dazu wurde das Granulat (Formmasse) über einen Trichter einer sich drehenden und beheizten Schnecke zugeführt. Die Form-masse wurde zur Schneckenspitze gefördert und dabei durch Wärmeleitung und Friktion aufgeschmolzen. War genügend Formmasse aufgeschmolzen, wurde die Schneckenrotation gestoppt und die Schmelze in ein temperiertes Werkzeug zur Herstellung von Stossfängem gedrückt. Der so erzeugte Stossfänger (Spritzling) wurde dem geöffneten Werkzeug entnommen.

Aufgrund der erhöhten Oberflächenhärte zeigten sich bei der Entnahme der Stossfänger keine Abzeichnungen von Handlingsgeräten.

In praktischen Tests hatten mit dem erfindungsgemäss verwendeten PP-Compound hergestellte Anbauteile eine bessere Lackhaftung als mit elastomermodifiziertem PP-Compound hergestellte Anbauteile, was auf die erhöhte Oberflächenhärte zurückzuführen ist.

## Patentansprüche

1. Verwendung von Polypropylen oder eines Polypropylencompounds, welches 5 bis 30 Gew.-% (bezogen auf das fertige Compound) Bariumsulfat mit einer mittleren Teilchengrösse von 0,5 bis 5 µm und 0,5 bis 3 Gew.-% (bezogen auf das fertige Compound) Talkum mit einer mittleren Teilchengrösse von 0,5 bis 5 µm enthält, zur Herstellung von Automobilanbauteilen.

2. Verwendung nach Anspruch 1, **dadurch gekennzeichnet, dass** die Zugabemenge an Bariumsulfat 5 bis 20 Gew.-% beträgt.

3. Verwendung nach Anspruch 1 oder 2, **dadurch gekennzeichnet, dass** die mittlere Teilchengrösse des Bariumsulfates 2 bis 4 um beträgt.

4. Verwendung nach einem der Ansprüche 1 bis 3, **dadurch gekennzeichnet, dass** die mittlere Teilchengrösse des Talkums 1 bis 3 µm beträgt.
